# EUROPÄISCHE PATENTSCHRIFT

(11) **EP 2 524 831 B1**
(45) Veröffentlichungstag und Bekanntmachung des Hinweises auf die Patenterteilung: **04.05.2016**
(21) Anmeldenummer: 12167610.0
(22) Anmeldetag: 11.05.2012
(51) Int. Cl.: B60J 5/04

(54) **Bauteil mit einer Befestigungseinrichtung zur Befestigung von externen Komponenten an einer Außenseite des Bauteils**
Element with a fixing device for fixing external components to the outside of the element
Élément avec un dispositif de fixation destiné à fixer des composants externes sur une face extérieure de l'élément

(30) Priorität: 20.05.2011 DE 102011076198
(43) Veröffentlichungstag der Anmeldung: 21.11.2012
(73) Patentinhaber: MEKRA Lang GmbH & Co. KG, 91465 Ergersheim (DE)
(72) Erfinder: Lang, Werner, 91465 Ergersheim (DE); Bauer, Stefan, 91466 Gerhardshofen (DE); Zink, Matthias, 91620 Ohrenbach (DE); Heger, Sebastian, 91438 Bad Windsheim (DE)
(74) Vertreter: Winter, Brandl, Fürniss, Hübner, Röss, Kaiser, Polte - Partnerschaft mbB

(56) Entgegenhaltungen:
- EP-A1- 1 598 227
- GB-A- 2 063 412
- JP-A- 7 215 058

## Beschreibung

Die Erfindung betrifft ein Bauteil, insbesondere ein Karosseriebauteil, mit wenigstens einem Hohlraum und einer Befestigungseinrichtung zur Befestigung von externen Komponenten an einer Außenseite des Bauteils nach dem Oberbegriff vom Anspruch 1, eine Befestigungseinrichtung hierfür nach Anspruch 13 sowie ein Fahrzeug mit einem solchen Karosseriebauteil nach Anspruch 14.

Ein derartiges Bauteil ist aus der JP 7215058 A bekannt. Aus der DE 10 2005 014 570 A1 ist ein Karosseriebauteil in Form einer Fahrzeugtür mit einem Aggregatträger bekannt. Der Aggregatträger umfasst ein Sicherheitselement zur Aufnahme von Kräften bei einem Frontalaufprall.

Die DE 196 16 788 A1 zeigt eine Fahrzeugtür, welche modular aufgebaut ist, d.h. Schlossträger, Scharnierträger und Untergurtprofil sind aus einzelnen Bauteilen gefertigt, welche dann z.B. mittels einer Nietverbindung verbindbar sind. Hierbei kann am Scharnierträger eine Aussparung vorgesehen sein, welche zur Befestigung eines Spiegeldreiecks dient.

Die EP 1 203 678 A2 beschreibt sie Möglichkeit, dünnwandige Karosseriebauteile mittels eines Gussteils als Krafteinleitungsstelle gezielt zur großflächigen Krafteinleitung zu versehen. Das Gussteil wird hierzu über geeignete Mittel mit dem Karosserieteil verbunden und kann hierbei durch eine Aussparung im Karosserieteil eine Kontaktfläche bieten, an welcher weitere Bauteile, z.B. ein Scharnier, ein Schloss, ein Rückspiegel etc. anbringbar sind.

Als nachteilig beim Gegenstand der EP 1 203 678 A2 wird die Tatsache erachtet, dass mit der dortigen direkten Anbringmöglichkeit an dem Gussteil aufwendige Maßnahmen ergriffen werden müssen, um Fahrzeugvibrationen an einem Übergang vom Gussteil auf das dort befestigte weitere Bauteil zu hindern. Besonders relevant ist dies bei Rückspiegeln, welche weitestgehend vibrationsfrei zu halten sind. Auch macht die frei vorliegende Aussparung in dem Karosserieteil Behandlungsmaßnahmen insbesondere an den Aussparungsrändern notwendig, damit diese gratfrei und korrosionsbeständig sind.

Allgemein gesagt, müssen Karosseriebauteile einerseits ausreichend stabil sein, um im Falle eines Unfalls den Insassen eines Fahrzeugs genügend Schutz zu bieten und um die sichere und dauerhafte Montage von externen Komponenten wie Spiegeln zu ermöglichen und andererseits sollen sie aus ökonomischen Gründen möglichst leicht sein. Es ist offensichtlich, dass es sich hierbei um widerstreitende Anforderungen handelt. Wenn externe Bauteile, wie Rückspiegel, an Karosseriebauteilen, insbesondere an Türen befestigt werden, muss der Türrahmen im Bereich der Befestigungsvorrichtung verstärkt ausgeführt sein, damit der Spiegel dauerhaft und stabil montiert werden kann. Die Verstärkung im Bereich der Befestigungsvorrichtung führt zu einem erhöhten Gewicht.

Demgegenüber ist es Aufgabe der vorliegenden Erfindung ein Bauteil mit Befestigungseinrichtung für externe Komponenten zu schaffen, bei dem die vorgenannten widersprüchlichen Anforderungen gleichzeitig erfüllt sind. Besonderer Wert soll hierbei auf eine weitestgehend vibrationsfreie Anbringung oder Befestigung der externen Komponenten gelegt werden. Weiter ist es Aufgabe der Erfindung eine Befestigungseinrichtung für und ein Fahrzeug mit einem solchen Bauteil anzugeben.

Die Lösung dieser Aufgabe erfolgt durch die Merkmale nach Anspruch 1 bzw. 13 bzw. 14.

Die vorliegende Erfindung schafft demnach ein Bauteil, insbesondere ein Karosseriebauteil, mit wenigstens einem Hohlraum und einer Befestigungseinrichtung zur Befestigung von externen Komponenten an einer Außenseite des Bauteils, mit einem in dem wenigstens einen Hohlraum befestigten Strukturelement, das eine durch eine Öffnung in der Außenseite des Bauteils zugängliche erste Kontaktfläche aufweist. Erfindungsgemäß ist hierbei ein Haltebock vorgesehen, an dem die externe Komponente befestigbar ist und der eine zweite und dritte Kontaktfläche aufweist. Die zweite Kontaktfläche liegt an der ersten Kontaktfläche an und die dritte Kontaktfläche liegt an der Außenseite des Bauteils an. Weiterhin dient ein Verbindungselement zur Verbindung von Strukturelement und Haltebock im Bereich von erster und zweiter Kontaktfläche, wobei bei einer Verbindung von Strukturelement und Haltebock mittels des Verbindungselements der Haltebock über die dritte Kontaktfläche gegen die Außenseite des Bauteils verspannt ist.

Dadurch, dass sich das Strukturteil in einen Hohlraum des Bauteils erstreckt und in dem Hohlraum an dem Bauteil mittels Schweißen, Nieten usw. befestigt ist, ist das Strukturteil mittels Kraft- und Formschluss mit dem Bauteil verbunden und zusätzlich verstärkt das Strukturteil in dem Hohlraum das Bauteil. Das Strukturteil erfüllt somit eine Doppelfunktion, nämlich es ist Montageteil für den Haltebock und dient als Verstärkung bzw. Versteifung des Bauteils mit Hohlraum. Durch das Aufeinanderpressen von erster und zweiter Kontaktfläche wird der Haltebock über die dritte Kontaktfläche gegen die Außenseite des Bauteils verspannt. Hierdurch ist eine ausgezeichnete Vibrationsbeständigkeit gegeben, da sowohl das Strukturteil selbst, als auch die Verspannung des Haltebocks eine inhärente Elastizität haben bzw. bereitstellen, welche vibrationsdämpfend wirkt.

Gemäß der vorteilhaften Ausgestaltung der Erfindung nach Anspruch 2 ist das Strukturteil speziell für die Funktion der Versteifung und Verstärkung des Bauteils ausgelegt.

Durch die flächige Verbindung von Strukturelement und Hohlrauminnenseite - Anspruch 3 - erhöht sich die Kontaktfläche zwischen Bauteil und Strukturelement und damit die Stabilität der Verbindung von Bauteil und Strukturelement.

Durch die vorteilhafte Ausgestaltung der Erfindung nach Anspruch 4 oder 5 werden die erste und zweite Kontaktfläche durch das Verbindungselement zueinander in der gewünschten Position angeordnet. Der Haltebock wird folglich in Bezug auf das Strukturteil und damit auf das Bauteil automatisch bei der Montage positioniert. Hierbei wird vorteilhafterweise durch den Formschlusseingriff die Selbstpositionierung von Strukturteil und Haltebock zueinander bei der Montage noch verstärkt. Bei der Montage des Haltebocks an dem Strukturteil ziehen sich die beiden Komponenten selbsttätig in die "richtige" Position.

Die Öffnung in dem Bauteil kann von dem Montagebock abgedeckt sein oder werden. Hierdurch kann das Eindringen von Feuchtigkeit in den Hohlraum des Bauteils und damit die Gefahr von Korrosionsschäden verringert werden. Auch aus Designgründen ist das Abdecken der Öffnung wünschenswert.

Durch die vorteilhaften Ausgestaltungen der Erfindung nach Anspruch 6 wird auf einfache und formschöne Weise eine Abdeckung der Öffnung in der Außenseite des Bauteils erreicht.

Durch die vorteilhaften Ausgestaltungen der Erfindung nach Anspruch 7 vereinfacht sich die Montage des Haltebocks an dem Strukturteil und damit die Montage externer Komponenten an dem Bauteil.

Durch die vorteilhafte Ausgestaltung der Erfindung nach Anspruch 8 wird die mechanische und elektrische Verbindung in einem Montageschritt bereit gestellt.

Das Strukturelement kann schwingungsdämpfend ausgebildet sein. Damit werden z.B. von einem freitragenden Rückspiegel herrührende Schwingungen noch weiter gedämpft. Auch kann durch erste und zweite Kontaktfläche und durch die dritte Kontaktfläche in Anlage an der Außenseite des Bauteils der wenigstens eine Hohlraum des Bauteils flüssigkeitsdicht abgedichtet sein.

Durch die vorteilhafte Ausgestaltung der Erfindung nach Anspruch 9 wird die Stabilität des Bauteils erhöht.

Das Strukturelement kann als Blechbauteil, Kunststoffspritzgussbauteil, Druckgussbauteil, Hybridbauteil (Kunststoff-Metall-Verbund, Organoblech) oder geschäumtes Kunststoffbauteil ausgebildet sein, wobei ein in dem Hohlraum liegendes inneres Teil des Strukturteils mit dem Bauteil verschweißt, vernietet, verklebt oder verschraubt ist.

Die Erfindung eignet sich insbesondere für Karosseriebauteile, insbesondere Fahrzeugtüren - Anspruch 12.

Anspruch 13 richtet sich auf die Befestigungseinrichtung an sich, die im Zusammenwirken mit dem Bauteil mit Hohlraum die nötige Stabilität und Vibrationsbeständigkeit der Befestigungseinrichtung für externe Komponenten ermöglicht. Die Weiterbildungen in den Unteransprüchen, die sich auf die Befestigungseinrichtung beziehen, gelten auch für Anspruch 13.

Weitere Einzelheiten, Aspekte und Vorteile der Erfindung ergeben sich aus der nachfolgenden Beschreibung bevorzugter Ausführungsformen anhand der Zeichnung.

Es zeigt:
Fig. 1 eine schematische Darstellung einer ersten Ausführungsform der Erfindung in Form einer Fahrzeugtür mit einer Befestigungseinrichtung für Rückspiegel;
Fig. 2 eine Detaildarstellung aus Fig. 1;
Fig. 3 eine schematische Schnittdarstellung entlang der Linie A - A in Fig. 2;
Fig. 4 eine schematische Darstellung einer zweiten Ausführungsform der Erfindung in Form einer Fahrzeugtür mit einer Befestigungseinrichtung für Rückspiegel; und
Fig. 5 eine Schnittdarstellung entlang der Linie B - B in Fig. 4.

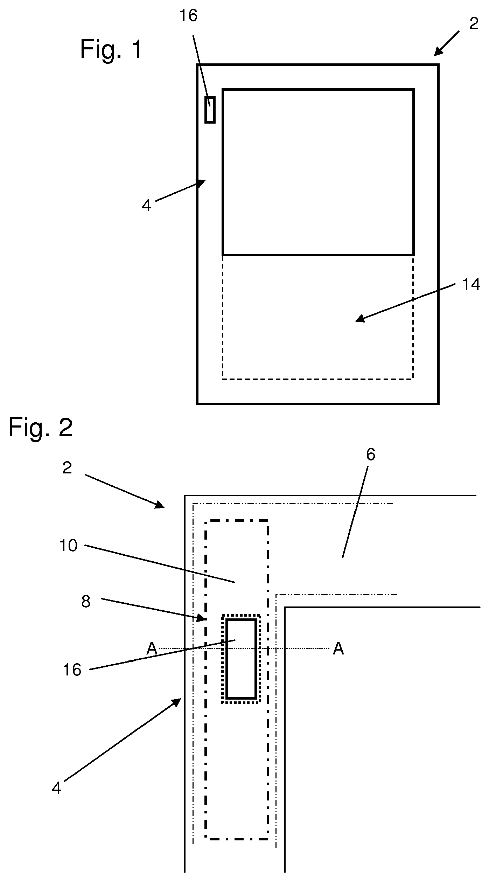

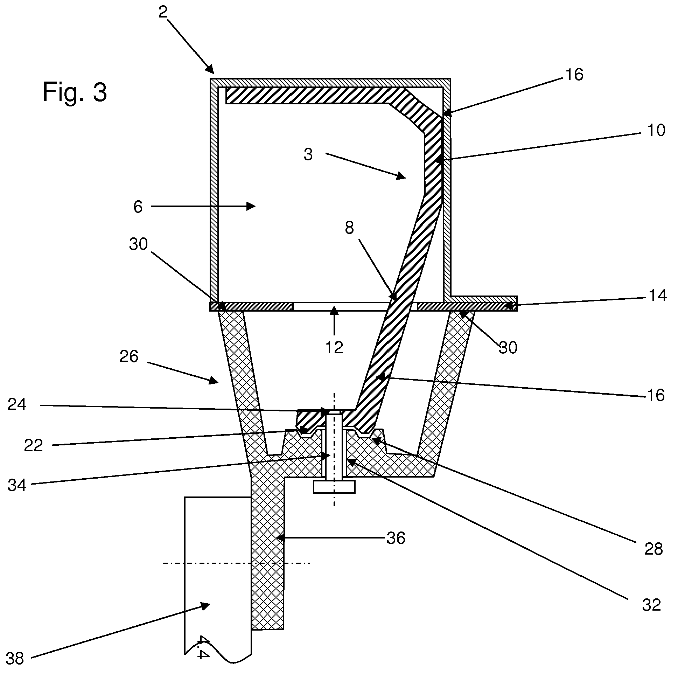

Die Figuren 1 bis 3 zeigen schematisch eine erste Ausführungsform der Erfindung. Eine Fahrzeugtür 2 weist im oberen Fahrzeugtürrahmen 4 im Bereich der A-Säule einen rohrförmiger Hohlraum 6 auf. In dem Hohlraum 6 erstreckt sich ein Strukturteil 8, das ein sich im Hohlraum 6 erstreckendes, rinnenförmiges Teil 10 und ein sich durch eine Öffnung 12 in der Außenseite 14 der Fahrzeugtür 2 nach außen hervortretendes Teil 16 aufweist. Das rinnenförmige innere Teil 10 des Strukturteils 8 liegt an zwei im Winkel zueinander verlaufenden Innenseiten 18 und 20 des Hohlraums 6 abschnittsweise flächig an und ist mit den Innenseiten 18, 20 verschweißt. An dem freien Ende des äußeren Teils 16 des Strukturteils 8 ist eine erste Kontaktfläche 22 mit strukturierter Oberfläche ausgebildet.

In der ersten Kontaktfläche 22 ist eine Schraubaufnahme 24 vorgesehen. An dem freien Ende des äußeren Teils 16 des Strukturteils 8 lässt sich ein becherförmiger Haltebock 26 mit einem Becherrand und einem Becherboden montieren. Auf dem Becherboden ist eine zweite Kontaktfläche 28 ausgebildet, die eine zu der ersten Kontaktfläche 22 komplementäre Oberfläche aufweist, wodurch die beiden Kontaktflächen 22, 28 und damit Haltebock 26 und Strukturteil 8 zueinander positioniert werden. Auf dem Becherrand ist eine dritte Kontaktfläche 30 ausgebildet, die an der Außenseite 14 der Fahrzeugtür 2 anliegt. In dem Becherboden des Haltebocks 26 ist ein Schraubloch 32 ausgebildet, das die zweite Kontaktfläche 28 durchsetzt. In das Schraubloch 32 wird ein Verbindungselement in Form einer Verbindungsschraube 34 eingeführt und mit der Schraubaufnahme 24 in der ersten Kontaktfläche 22 verschraubt. Hierdurch wird der Haltebock 26 mit nur einer Schraube an dem Strukturteil 8 und damit an der Fahrzeugtür 2 befestigt.

Der Haltebock weist ferner ein Trägerteil 36 auf, das sich von dem Becherboden weg erstreckt und an dem sich eine Einrichtung für indirekte Sicht, z. B. ein Rückspiegel 38, befestigen lässt. Der becherförmige Haltebock 26 überdeckt die Öffnung 12 in der Außenseite14 der Fahrzeugtür 2 und das daraus hervortretenden äußere Teil 16 des Strukturteils 8, so dass nur der Haltebock 26 zu sehen ist.

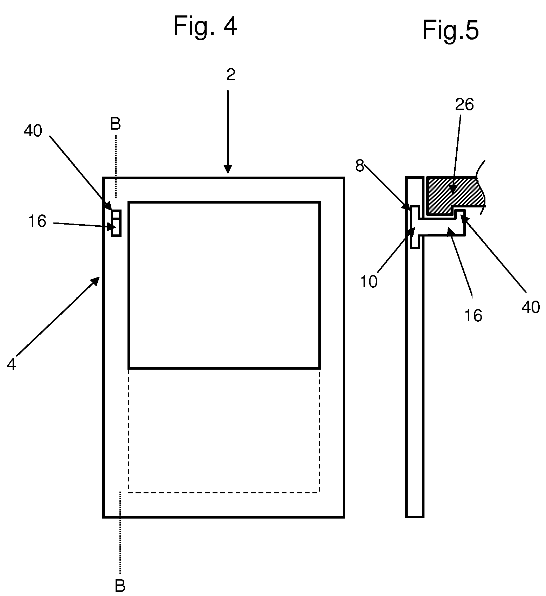

Fig. 4 und 5 zeigt eine zweite Ausführungsform der Erfindung, die im Wesentlichen den gleichen Aufbau wie die erste Ausführungsform aufweist. Der Unterschied zur ersten Ausführungsform besteht lediglich darin, dass das äußere Teil 16 des Strukturteils 8 einen vertikal noch oben stehenden Haltehaken 40 aufweist, an dem der Haltebock 26 mit Rückspiegel 38 bei der Montage eingehängt werden können. Auf diese Weise ist eine Ein-Mann-Montage möglich.

Das Strukturbauteil 8 kann ein Blechbauteil, das durch Stanzen und Biegen in die gewünschte Form gebracht wird, ein Kunststoffspritzgussbauteil, ein Druckgussbauteil, eine Hybridbauteil (Kunststoff-Metall-Verbund, Organoblech) oder ein geschäumtes Kunststoffbauteil sein. Das Strukturbauteil 8 kann mit den Innenseiten 18, 20 des Hohlraums 6 verschraubt, verschweißt, verklebt oder vernietet sein. Das innere Teil 10 des Strukturteils 8 kann sich in dem Hohlraum 8 über den gesamten Fahrzeugtürrahmen oder über einen Teil davon erstrecken. Das innere Teil 10 des Strukturteils 8 kann zusätzlich auch als Aggregateträger entsprechend der DE 10 2005 014 570 A1 genutzt werden.

In einer nicht dargestellten alternativen Ausgestaltung der Erfindung ragt das Strukturteil nicht aus der Öffnung in der Außenseite der Fahrzeugtür heraus, sondern der Haltebock ragt durch die Öffnung in den Hohlraum hinein.

### Bezugszeichen

- 2: Fahrzeugtür
- 4: oberer Bereich von 2, Seite A-Säule
- 6: Hohlraum
- 8: Strukturteil
- 10: inneres Teil von 8
- 12: Öffnung in 2
- 14: Außenseite von 2
- 16: äußeres Teil von 8
- 18: erste Innenseite von 6
- 20: zweite Innenseite von 6
- 22: erste Kontaktfläche
- 24: Schraubaufnahme
- 26: Haltebock
- 28: zweite Kontaktfläche
- 30: dritte Kontaktfläche
- 32: Schraubloch
- 34: Verbindungsschraube
- 36: Trägerteil
- 38: Einrichtung für indirekte Sicht, Rückspiegel
- 40: Haltehaken

## Patentansprüche

1. Bauteil (2), insbesondere Karosseriebauteil, mit wenigstens einem Hohlraum (6) und einer Befestigungseinrichtung zur Befestigung von externen Komponenten (38) an einer Außenseite (14) des Bauteils (2), mit
einem in dem wenigstens einen Hohlraum (6) befestigten Strukturelement (8), das eine durch eine Öffnung (12) in der Außenseite (14) des Bauteils zugängliche erste Kontaktfläche (22) aufweist,
**gekennzeichnet durch**
einen Haltebock (26), an dem die externe Komponente (38) befestigbar ist und der eine zweite und dritte Kontaktfläche (28, 30) aufweist,
wobei die zweite Kontaktfläche (28) an der ersten Kontaktfläche (22) anliegt und wobei die dritte Kontaktfläche (30) an der Außenseite (14) des Bauteils (2) anliegt, und
ein Verbindungselement (34) zur Verbindung von Strukturelement (8) und Haltebock (26) im Bereich von erster und zweiter Kontaktfläche (22, 28), wobei weiterhin bei einer Verbindung von Strukturelement (8) und Haltebock (26) mittels des Verbindungselements (34) der Haltebock (26) über die dritte Kontaktfläche (30) gegen die Außenseite (14) des Bauteils (2) verspannt ist.

2. Bauteil nach Anspruch 1, **dadurch gekennzeichnet, dass** das Strukturelement (8) zur Aussteifung des Bauteils (2) ausgelegt ist.

3. Bauteil nach Anspruch 1 oder 2, **dadurch gekennzeichnet, dass** das Strukturelement (8) wenigstens abschnittsweise flächig an einer Innenseite (18, 20) des Hohlraums (6) befestigt ist.

4. Bauteil nach einem der vorhergehenden Ansprüche, **dadurch gekennzeichnet, dass** das Verbindungselement (34) die erste und zweite Kontaktfläche (22, 28) durchsetzt.

5. Bauteil nach einem der vorhergehenden Ansprüche, **dadurch gekennzeichnet, dass** das Verbindungselement eine Schraube (34) ist, die den Haltebock (26) im Bereich der zweiten Kontaktfläche (28) durchsetzt und in eine Schraubaufnahme (24) im Bereich der ersten Kontaktfläche (22) des Strukturelements (8) eingreift, wobei die erste und die zweite Kontaktfläche (22, 28) formschlüssig ineinander greifen.

6. Bauteil nach einem der vorhergehenden Ansprüche, **dadurch gekennzeichnet, dass** der Haltebock (26) becherförmig mit einem Becherrand und einem Becherboden ausgebildet ist, wobei
der Becherrand die dritte Kontaktfläche (30) bildet und an der Außenseite (14) des Bauteils aufliegt, und
die zweite Kontaktfläche (28) auf dem Becherboden ausgebildet ist.

7. Bauteil nach einem der vorhergehenden Ansprüche, **dadurch gekennzeichnet, dass** ein aus der Öffnung (12) in der Außenseite (14) des Bauteils hervorstehendes Teil (16) des Strukturelements (8) hakenförmig ausgebildet ist und einen Haltehaken (40) für den Haltebock (26) bei der Montage aufweist.

8. Bauteil nach einem der vorhergehenden Ansprüche, **dadurch gekennzeichnet, dass** über das Strukturelement (8) und den Haltebock (26) eine elektrische Verbindung zwischen der externen Komponente (38) und dem wenigstens einen Hohlraum (6) bereitgestellt ist.

9. Bauteil nach einem der vorhergehenden Ansprüche, **dadurch gekennzeichnet, dass** sich das Strukturelement (8) in dem wenigstens einen Hohlraum (6) über einen Bereich des Hohlraums (6) erstreckt, der größer ist als die Öffnung (12) in der Außenseite (14) des Bauteils (2).

10. Bauteil nach einem der vorhergehenden Ansprüche, **dadurch gekennzeichnet, dass** das Strukturelement als Blechbauteil, Kunststoffspritzgussbauteil, Druckgussbauteil, Hybridbauteil oder geschäumtes Kunststoffbauteil ausgebildet ist.

11. Bauteil nach einem der vorhergehenden Ansprüche, **dadurch gekennzeichnet, dass** ein in dem Hohlraum (6) liegendes inneres Teil (10) des Strukturteils (8) mit dem Bauteil (2) verschweißt, vernietet, verklebt oder verschraubt ist.

12. Bauteil nach einem der vorhergehenden Ansprüche, **dadurch gekennzeichnet, dass** es eine Fahrzeugtür ist.

13. Befestigungseinrichtung für ein Bauteil nach einem der vorhergehenden Ansprüche, mit
einem Strukturelement (8), das ein inneres Teil (10) umfasst, das in einem Hohlraum (6) des Bauteils anzuordnen ist, und einem äußeren Teil (16), das sich quer von dem inneren Teil (10) wegerstreckt und eine erste Kontaktfläche (22) aufweist,
einem Haltebock (26) an dem eine externe Komponente (38) befestigbar ist und der eine zweite und eine dritte Kontaktfläche (28, 30) aufweist,
wobei die zweite Kontaktfläche (28) an der ersten Kontaktfläche (22) anliegt und wobei die dritte Kontaktfläche (30) zur Anlage an einer Außenseite (14) des Bauteils (2) ausgelegt ist, und
einem Verbindungselement (34) zur Verbindung von Strukturelement (8) und Haltebock (26) im Bereich von erster und zweiter Kontaktfläche (22, 28), wobei bei einer Verbindung von Strukturelement (8) und Haltebock (26) mittels des Verbindungselements (34) der Haltebock (26) über die dritte Kontaktfläche (30) gegen die Außenseite (14) des Bauteils (2) verspannt ist.

14. Fahrzeug mit wenigstens einem als Karosseriebauteil (2) ausgeführtem Bauteil nach einem der vorhergehenden Ansprüche und einer Einrichtung (38) für indirekte Sicht, die als externe Komponente an dem Haltebock (26) befestigt ist.

## Claims

1. Component (2), in particular a vehicle body component, comprising at least one cavity (6) and a securing device for securing external components (38) on an outer side (14) of the component (2), comprising
a structural element (8) secured in the at least one cavity (6), which structural element comprises a first contact surface (22) accessible through an opening (12) in the outside (14) of the component,
**characterised by**
a hanger bracket (26), on which the external component (38) can be secured and which comprises a second and third contact surface (28, 30),
wherein the second contact surface (28) bears on the first contact surface (22) and wherein the third contact surface (30) bears on the outside (14) of the component (2), and
a connecting element (34) for connecting the structural element (8) and hanger bracket (26) in the region of the first and second contact surface (22, 28), wherein furthermore on the connection of the structural element (8) and hanger bracket (26) by means of the connecting element (34) the hanger bracket (26) is braced by the third contact surface (30) against the outside (14) of the component (2).

2. Component according to claim 1, **characterised in that** the structural element (8) is designed to reinforce the component (2).

3. Component according to either claim 1 or claim 2, **characterised in that** the structural element (8) is secured at least in sections to lie flat against an inner side (18, 20) of the cavity (6).

4. Component according to any one of the preceding claims, **characterised in that** the connecting element (34) penetrates the first and second contact surface (22, 28).

5. Component according to any one of the preceding claims, **characterised in that** the connecting element is a screw (34), which penetrates the hanger bracket (26) in the region of the second contact surface (28) and engages in a screw mount (24) in the region of the first contact surface (22) of the structural element (8), wherein the first and the second contact surface (22, 28) engage with one another in a positive locking manner.

6. Component according to any one of the preceding claims, **characterised in that** the hanger bracket (26) is designed to be cup-shaped with a cup edge and a cup base, wherein
the cup edge forms the third contact surface (30) and bears against the outside (14) of the component, and
the second contact surface (28) is formed on the cup base.

7. Component according to any one of the preceding claims, **characterised in that** a part (16) of the structural element (8) protruding out of the opening (12) in the outside (14) of the component is designed to be hook-like and comprises a hook holder (40) for the hanger bracket (26) for assembly.

8. Component according to any one of the preceding claims, **characterised in that** by means of the structural element (8) and the hanger bracket (26) an electrical connection is provided between the external component (38) and the at least one cavity (6).

9. Component according to any one of the preceding claims, **characterised in that** the structural element (8) extends in the at least one cavity (6) over an area of the cavity (6), which is greater than the opening (12) in the outside (14) of the component (2).

10. Component according to any one of the preceding claims, **characterised in that** the structural element is designed as a sheet metal component, plastic injection moulded component, pressure die-cast component, hybrid component or foamed plastic component.

11. Component according to one of the preceding claims, **characterised in that** an inner part (10) of the structural element (8) in the cavity (6) is welded, riveted, adhered or screwed to the component (2).

12. Component according to any one of the preceding claims, **characterised in that** it is a vehicle door.

13. Securing device for a component according to any one of the preceding claims comprising
a structural element (8) which comprises an inner part (10), which is to be arranged in a cavity (6) of the component, and
an outer part (16) which extends away transversely from the inner part (10) and comprises a first contact surface (22),
a hanger bracket (26) on which an external component (38) can be secured and which comprises a second and a third contact surface (28, 30),
wherein the second contact surface (28) bears against the first contact surface (22) and wherein the third contact surface (30) is designed for bearing on an outside (14) of the component (2), and
a connecting element (34) for connecting the structural element (8) and hanger bracket (26) in the region of the first and second contact surface (22, 28), wherein when the structural element (8) and hanger bracket (26) are connected by means of the connecting element (34) the hanger bracket (26) is braced by the third contact surface (30) against the outside (14) of the component (2).

14. Motor vehicle comprising at least one component designed as a vehicle body component (2) according to any one of the preceding claims and a device (38) for indirect view which is secured onto the hanger bracket (26) as an external component.

## Revendications

1. Elément (2), en particulier élément de carrosserie, avec au moins un espace creux (6) et un dispositif de fixation pour la fixation de composants externes (38) sur une face extérieure (14) de l'élément (2) avec
un élément structurel (8) fixé dans l'au moins un espace creux (6), qui présente une première surface de contact (22) accessible par une ouverture (12) dans la face extérieure (14) de l'élément,
**caractérisé par**
un support de retenue (26), sur lequel le composant externe (38) peut être fixé et qui présente une deuxième et troisième surface de contact (28, 30),
la deuxième surface de contact (28) reposant contre la première surface de contact (22) et la troisième surface de contact (30) reposant contre la face extérieure (14) de l'élément (2), et
un élément de liaison (34) pour la liaison de l'élément structurel (8) et du support de retenue (26) dans la zone de la première et deuxième surface de contact (22, 28), le support de retenue (26) étant en outre précontraint sur la troisième surface de contact (30) contre la face extérieure (14) de l'élément (2) en cas de liaison de l'élément structurel (8) et du support de retenue (26) à l'aide de l'élément de liaison (34).

2. Elément selon la revendication 1, **caractérisé en ce que** l'élément structurel (8) est conçu pour renforcer l'élément (2).

3. Elément selon la revendication 1 ou 2, **caractérisé en ce que** l'élément structurel (8) est fixé au moins par sections sur la surface sur une face inférieure (18, 20) de l'espace creux (6).

4. Elément selon l'une quelconque des revendications précédentes, **caractérisé en ce que** l'élément de liaison (34) traverse la première et deuxième surface de contact (22, 28).

5. Elément selon l'une quelconque des revendications précédentes, **caractérisé en ce que** l'élément de liaison est une vis (34) qui traverse le support de retenue (26) dans la zone de la deuxième surface de contact (28) et s'engage dans un logement à vis (24) dans la zone de la première surface de contact (22) de l'élément structurel (8), la première et la deuxième surface de contact (22, 28) s'engageant l'une dans l'autre à complémentarité de formes.

6. Elément selon l'une quelconque des revendications précédentes, **caractérisé en ce que** le support de retenue (26) est réalisé en forme de coupe avec un bord de coupe et un fond de coupe,
le bord de coupe formant la troisième surface de contact (30) et reposant sur la face extérieure (14) de l'élément et
la deuxième surface de contact (28) étant réalisée sur le fond de coupe.

7. Elément selon l'une quelconque des revendications précédentes, **caractérisé en ce qu'**une partie (16), dépassant de l'ouverture (12) dans la face extérieure (14) de l'élément, de l'élément structurel (8) est réalisée en forme de crochet et présente un crochet de retenue (40) pour le support de retenue (26) lors du montage.

8. Elément selon l'une quelconque des revendications précédentes, **caractérisé en ce qu'**une liaison électrique entre le composant externe (38) et l'au moins un espace creux (6) est mise à disposition par le biais de l'élément structurel (8) et du support de retenue (26).

9. Elément selon l'une quelconque des revendications précédentes, **caractérisé en ce que** l'élément structurel (8) s'étend dans l'au moins un espace creux (6) sur une zone de l'espace creux (6) qui est plus grande que l'ouverture (12) dans la face extérieure (14) du composant (2).

10. Elément selon l'une quelconque des revendications précédentes, **caractérisé en ce que** l'élément structurel est réalisé comme un élément de tôle, un élément moulé par injection en plastique, un élément moulé sous pression, un élément hybride ou un élément en plastique expansé.

11. Elément selon l'une quelconque des revendications précédentes, **caractérisé en ce qu'**une partie intérieure (10) se trouvant dans l'espace creux (6) de l'élément structurel (8) est soudée, rivetée, collée ou vissée à l'élément (2).

12. Elément selon l'une quelconque des revendications précédentes, **caractérisé en ce qu'**il est une porte de véhicule.

13. Dispositif de fixation pour un élément selon l'une quelconque des revendications précédentes, avec
un élément structurel (8) qui comporte une partie intérieure (10) qui est à agencer dans un espace creux (6) de l'élément, et une partie extérieure (16) qui s'étend transversalement loin de la partie intérieure (10) et présente une première surface de contact (22),
un support de retenue (26), sur lequel peut être fixé un composant externe (38) et qui présente une deuxième et une troisième surface de contact (28, 30),
la deuxième surface de contact (28) reposant contre la première surface de contact (22) et la troisième surface de contact (30) étant conçue pour l'appui contre une face extérieure (14) de l'élément (2), et
un élément de liaison (34) pour la liaison de l'élément structurel (8) et du support de retenue (26) dans la zone de la première et deuxième surface de contact (22, 28), le support de retenue (26) étant précontraint sur la troisième surface de contact (30) contre la face extérieure (14) de l'élément (2) en cas de liaison de l'élément structurel (8) et du support de retenue (26) à l'aide de l'élément de liaison (34).

14. Véhicule avec au moins un élément réalisé comme un élément de carrosserie (2) selon l'une quelconque des revendications précédentes et un dispositif (38) pour la vision indirecte qui est fixé comme composant externe sur le support de retenue (26).
